# EUROPEAN PATENT SPECIFICATION

(11) **EP 1 312 505 B1**
(45) Date of publication and mention of the grant of the patent: **24.01.2007**
(21) Application number: 02257684.7
(22) Date of filing: 06.11.2002
(51) Int. Cl.: B60Q 1/26

(54) **Warning lamp**
Warnlampe
Lampe de signalisation

(30) Priority: 15.11.2001 GB 0127365
(43) Date of publication of application: 21.05.2003
(73) Proprietor: Britax PMG Limited, Warwick CV34 6DE (GB)
(72) Inventor: Izadi, Bejan, Swanland, E. Yorkshire HU14 3GD (GB)
(74) Representative: Waddington, Richard

(56) References cited:
- EP-A- 0 395 351
- EP-A- 0 405 275
- DE-A- 4 120 754

## Description

This invention relates to a warning lamp of the type comprising a reflector mounted on a rotary platform which is journalled on a hollow pillar, and a light source mounted on the pillar and having a centre contact engaging with a connector within said pillar, the reflector being arranged to direct light from said light source in directions substantially perpendicular to the axis of rotation of said platform. A warning light of this type is disclosed in EP-A-0879736.

The light source includes a conventional lamp holder having a flange adapted to abut against the top of the pillar where it is held in place by a clip. The pillar and flange serve as one electrical contact for the light source. The lamp holder has a second central contact in the form of a spade terminal adapted to receive a push on socket connector, electrical connection to which is made by a piece of flexible insulated wire, the connector requires a high temperature insulation sleeve to prevent a risk of short circuit should the beacon be energised when the lamp holder has been detached from the pillar. If the light source is a halogen bulb which runs at a relatively high temperature there is a risk of the connector becoming welded to the contact blade making removable difficult during lamp replacement. A warning lamp according to the preamble of claim 1 is disclosed in EP-A-0 405 275.

According to the present invention there is provided an apparatus and method as set forth in the appended claims. Preferred features of the invention will be apparent from the dependent claims, and the description which follows. An embodiment of the invention will now be described, by way of example, with reference to the accompanying drawings, in which:
Figure 1 is a partially broken away side view of a warning lamp in accordance with the invention with the base and rotary platform shown in cross-section taken on a diametrically oriented plane;
Figure 2 is an exploded view of the base, rotary platform and motor showing the lamp holder spaced apart from the top of the hollow pillar;
Figure 3 is a perspective view of the lamp holder and its associated contacts; and
Figure 4 is an enlarged cross-sectional view showing the pulley connecting the motor to the rotary platform.

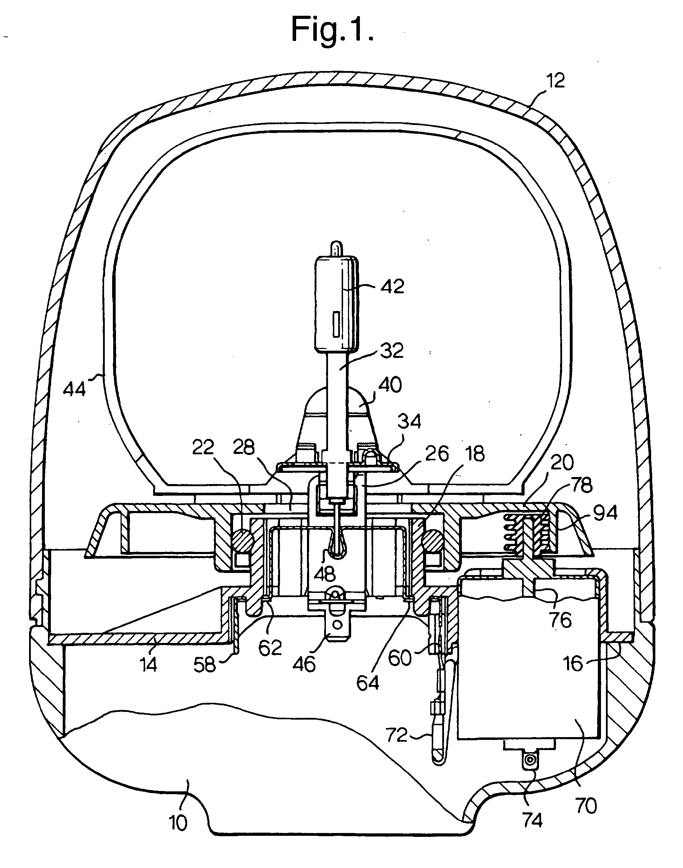

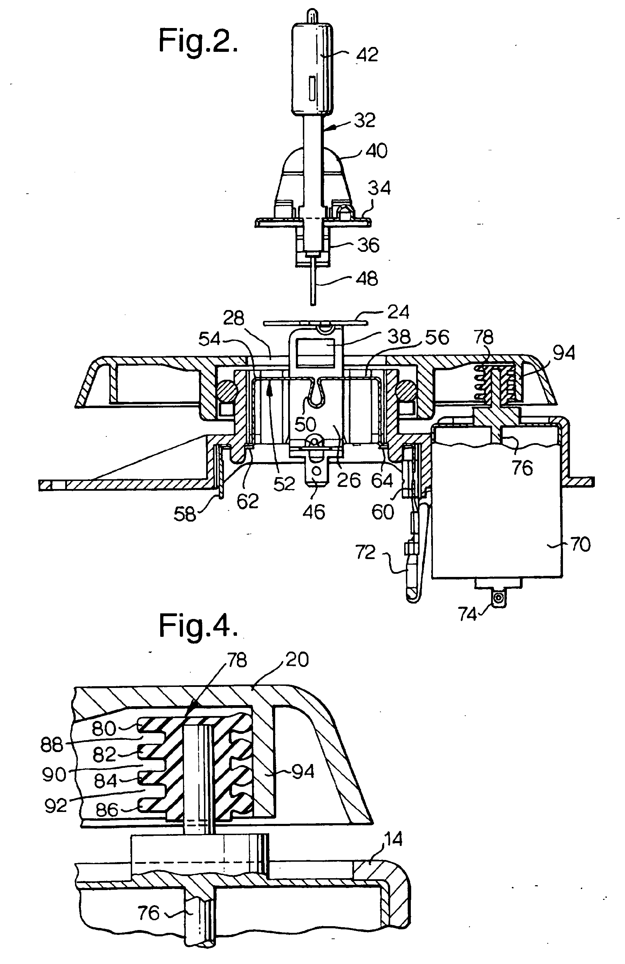

Referring to Figures 1 to 3, a warning lamp in accordance with the invention has a hollow base 10 and a translucent dome-like cover 12, both formed from plastics material. The base 10 is opaque, while the cover 12 is coloured in accordance with the required colour of light from the lamp.

An electrically insulating base plate 14 is mounted on a shoulder 16 within the base 10. A hollow stationery pillar or shaft 18 projects upwardly from the centre of the plate 14 and has a reflector platform 20 journalled thereon by means of a ball race 22.

A metal lamp-mounting platform 24 is formed integrally with a pair of legs 26 that project downwardly through a hole 28 in the reflector platform 20 and are secured to the base plate 14 below the bottom of the shaft 18.

A bulb holder 32 has a circular flange 34 which abuts against the top of the platform 24 and is held in place thereon by a clip having resilient lugs 36 that engage in respective windows 38 in each of the legs 26. The clip also has finger grips 40 which, when squeezed together, disengage the lugs 36 from the windows 38 and allow the bulb holder 34 to be removed. The bulb holder 34 supports a bulb 42 which is located at the focus of a parabolic or hyperbolic reflector 44 that is mounted on the rotary platform 20. The reflector 44 thus produces a generally horizontal beam of light which rotates with the platform 20.

The flange 36, which serves as one terminal of the bulb holder 34, is in electrical connection with the platform 24. Each leg 26 has a blade terminal 46 on its bottom end. A first of the terminals 46 is connected to a first pole of an electrical power supply (not shown).

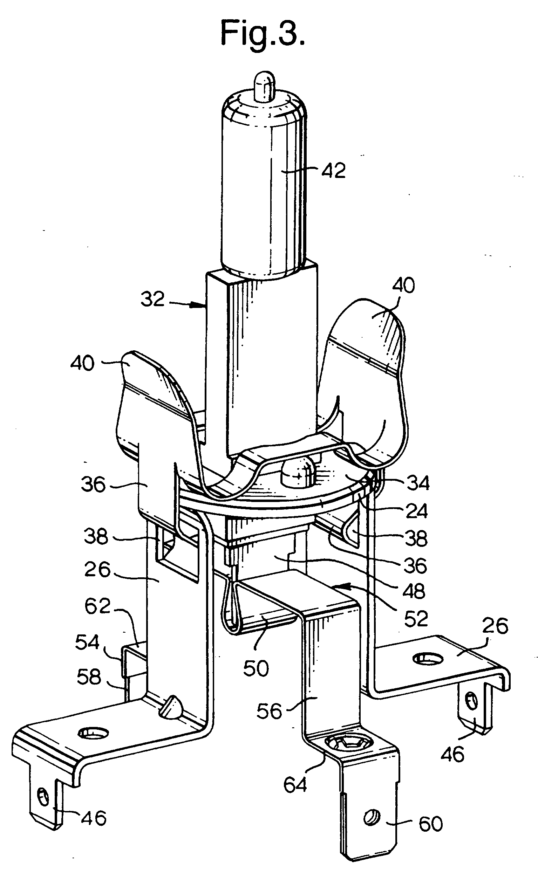

The second terminal of the lamp holder 34 comprises a blade terminal 48 which projects downwardly from the bottom of the bulb holder. This is engaged by a U-shaped central portion 50 of a phosphor bronze strip 52. As can best be seen in Figure 3, the strip 52 also has L-shaped side limbs 54 and 56 which extend down the inside of the shaft 18 and have respective blade terminals 58 and 60 on their bottom ends 62 and 64, which are secured to the base plate 14 adjacent to the bottom of the shaft 18. The terminal 58 is connected to a second pole of the power supply.

An electric motor 70 is mounted on the underside of the base plate 14 and has one of its electrical contacts in the form of a connector 72 engaging with the blade terminal 60. Its other electrical connector takes the form of a blade terminal 74 on its bottom end which is connected by a link (not shown) to the second of the terminals 46.

The shaft 76 of the motor 70 projects upwardly through the base plate 14 and has a rubber pulley 78 mounted on its upper end. As can best be seen in Figure 4, the pulley 78 comprises four cylindrical ribs 80, 82, 84 and 86 with annular grooves 88, 90 and 92 therebetween. The ribs 80-86 engage with a cylindrical flange 94 on the underside of the rotary platform 20. The flange 94 is spaced apart from the axis of the shaft 76 by less than the radius of the ribs 80-86 so that such ribs are compressed radially and bulge axially into the spaces 88-92, as illustrated. This maintains a satisfactory drive under a range of variations of the distance between the shaft 76 and the flange 94. Such differences can be due to manufacturing tolerances and also to changes of temperature. This pulley profile also provides relatively quiet running.

## Claims

1. A warning lamp comprising a reflector (44) mounted on a rotary platform (20) which is journalled on a hollow pillar (18), and a light source (42) mounted on the pillar (18) and having a centre contact (48) engaging with a connector (52) within said pillar (18), the reflector (44) being arranged to direct light from said light source (42) in directions substantially perpendicular to the axis of rotation of said platform (20), **characterised in that** said connector comprises a spring (52) having a U-shaped portion (50) comprising two sidewalls, and a support limb (54) extending from one of the sidewalls of the U-shaped portion (50) and having an end (62) secured to the pillar (18) so as to support the U-shaped portion (50) in a position in which its sidewalls grip said centre contact (48) of the light source (42).

2. A warning lamp according to claim 1, wherein the support limb (54) is L-shaped with one limb extending from the U-shaped portion to an inner wall of said pillar (18) and another limb extending downwardly adjacent to said inner wall.

3. A warning lamp according to claim 1 or 2, wherein the spring has two support limbs (54, 56), each extending from a respective sidewall of the U-shaped portion (52).

## Patentansprüche

1. Warnlampe, umfassend einen Reflektor (44), der auf einer Drehplattform (20) montiert ist, welche auf einer hohlen Säule (18) gelagert ist, sowie eine Lichtquelle (42), die auf der Säule (18) montiert ist und einen Zentralkontakt (48) aufweist, der in Eingriff mit einem Verbinder (52) innerhalb der Säule (18) steht, wobei der Reflektor (44) dazu ausgelegt ist, Licht von der Lichtquelle (42) in Richtungen zu lenken, die im wesentlichen orthogonal zur Drehachse der Plattform (20) sind, **dadurch gekennzeichnet, dass** der Verbinder eine Feder (52) umfaßt, die einen U-förmigen Bereich (50) aufweist, der zwei Seitenwände umfaßt, sowie einen Tragschenkel (54), der sich von einer der Seitenwände des U-förmigen Bereichs (50) erstreckt und ein Ende (62) hat, das derart an der Säule (18) angebracht ist, dass es den U-förmigen Bereich (50) in einer Position trägt, in der seine Seitenwände den Zentralkontakt (48) der Lichtquelle (42) ergreifen.

2. Warnlampe nach Anspruch 1, wobei der Tragschenkel (54) L-förmig ist, wobei sich ein Schenkel von dem U-förmigen Bereich zu einer Innenwand der Säule (18) erstreckt, und sich ein anderer Schenkel der Innenwand benachbart abwärts erstreckt.

3. Warnlampe nach Anspruch 1 oder 2, wobei die Feder zwei Tragschenkel (54, 56) aufweist, die sich jeweils von einer jeweiligen Seitenwand des U-förmigen Bereichs (52) erstrecken.

## Revendications

1. Lampe de signalisation comprenant un réflecteur (44) monté sur une plate-forme rotative (20) qui est articulée sur un poteau creux (18), et une source de lumière (42) montée sur le poteau (18) et ayant un contact central (48) coopérant avec un connecteur (52) à l'intérieur dudit poteau (18), le réflecteur (44) étant agencé pour diriger la lumière à partir de ladite source de lumière (42) dans des directions sensiblement perpendiculaires à l'axe de rotation de ladite plate-forme (20),
**caractérisée en ce que** ledit connecteur comprend un ressort (52) ayant une portion en forme de U (50) comprenant deux parois latérales, et une patte support (54) s'étendant à partir de l'une des parois latérales de la portion en forme de U (50) et ayant une extrémité (62) fixée sur le poteau (18) de façon à supporter la portion en forme de U (50) dans une position dans laquelle ses parois latérales enserrent ledit contact central (48) de la source de lumière (42).

2. Lampe de signalisation selon la revendication 1,
dans laquelle l'élément de support (54) est en forme de L avec une patte s'étendant de la portion en forme de U jusqu'à une paroi interne dudit poteau (18) et une autre patte s'étendant vers le bas de façon contiguë à ladite paroi interne.

3. Lampe de signalisation selon les revendications 1 ou 2,
dans laquelle le ressort comporte deux pattes support (54,56), chacune s'étendant à partir d'une paroi latérale respective de la portion en forme de U (52).
